# EUROPEAN PATENT APPLICATION

(11) **EP 4 635 785 A1**
(43) Date of publication of application: **22.10.2025**
(21) Application number: 24901750.0
(22) Date of filing: 31.01.2024
(51) Int. Cl.: B60L 53/50, H02J 3/32, H02M 7/66

(54) **CHARGING AND DISCHARGING APPARATUS, AND ELECTRIC-VEHICLE CHARGER**

(71) Applicant: Delta Electronics, Inc., Taoyuan City, Taiwan 320023 (TW)
(72) Inventor: CHANG, Chien-chung, Taoyuan City, Taiwan 320023 (CN); HSU, Jui-yuan, Taoyuan City, Taiwan 320023 (CN); HUANG, Wei-te, Taoyuan City, Taiwan 320023 (CN); WU, Chun-wei, Taoyuan City, Taiwan 320023 (CN)
(74) Representative: 2K Patentanwälte Blasberg Kewitz & Reichel
(86) International application number: PCT/CN2024/074848
(87) International publication number: WO 2025/160787

(57) **Abstract**

A charging and discharging device is coupled to a power grid through a first cable and a plug, and coupled to an electric vehicle through a second cable and a connection terminal. The charging and discharging device includes a charging circuit, a feeding circuit, and a controller. The charging circuit provides a grid power from the plug to the connection terminal through a charging path. The feeding circuit provides a vehicle power from the connection terminal to the plug through a feeding path. In a charging mode, the controller sets a first current to be able to flow through the charging path. In a feeding mode, the controller sets a second current to be able to flow through the feeding path. The present disclosure further provides an electric vehicle charger.

## Description

### Technical Field

The present disclosure relates to a charging and discharging device and an electric vehicle charger, and more particularly to a portable charging and discharging device and an electric vehicle charger.

### Description of Related Art

The statements in this section merely provide background information related to the present disclosure and do not necessarily constitute prior art.

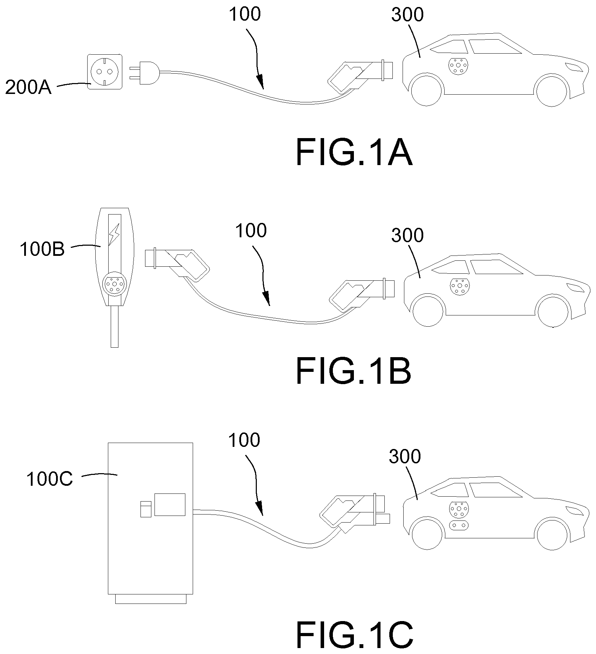

At present, vehicles are gradually being replaced by electric drive instead of fuel drive due to the emphasis on energy conservation and carbon reduction. The power source of electric vehicles is generally batteries, and therefore the batteries need to be charged to maintain the endurance of the electric vehicles. In general, common electric vehicle chargers include the following configuration structures of FIG. 1A to FIG. 1C. The charging technology in FIG. 1A uses a simple extension wire to charge at home from a standard power socket. Specifically, this type of electric vehicle charger 100 involves connecting the electric vehicle 300 to a standard household socket 200A, and the electric vehicle charger 100 usually has only a single cable connecting the electric vehicle 300 and the socket 200A. This type of electric vehicle charger 100 is generally suitable for light vehicles (such as electric motorcycles) due to its simple structure.

The charging technology in FIG. 1B involves charging the electric vehicle 300 using a dedicated charging station or a home wall-mounted charging box (collectively referred to as a grid charging device 100B). Since the connection cable is provided by the grid charging device 100B, the electric vehicle 300 does not need to use a dedicated cable for charging, and therefore it is currently the first choice for home charging. The charging technology in FIG. 1C is generally referred to as "DC fast charging", or simply "fast charging". This type of charging usually requires a charging pile 100C, and can usually provide high-power charging. Specifically, this type of electric vehicle charger 100 generally provides DC power to charge the electric vehicle 300, and the current can reach hundreds of amperes and the power can reach hundreds of kilowatts.

However, the current electric vehicle charger 100 only supports the technology of charging the electric vehicle, but does not include the technology of feeding power back to the power grid. On the other hand, the current electric vehicle charger 100 of FIG. 1B is fixed at a home or a specific location and cannot be moved, and cannot effectively support the power grid.

Therefore, how to design a portable charging and discharging device and an electric vehicle charger to combine the advantages of the two and eliminate the disadvantages so as to make it easier for car owners to feed the power of electric vehicles back to the power grid and provide a bidirectional charging function has become a critical topic in this field.

### SUMMARY

In order to solve the above-mentioned problems, the present disclosure provides a charging and discharging device. The charging and discharging device is coupled to a power grid through a first cable and a plug, and is coupled to an electric vehicle through a second cable and a connection terminal. The charging and discharging device includes a charging circuit, a feeding circuit, and a controller. The charging circuit is coupled to the first cable and the second cable, and provides a charging path for the grid power to be transmitted from the plug to the connection terminal. The feeding circuit is coupled to the first cable and a second cable, and provides a feeding path for the vehicle power to be transmitted from the connection terminal to the plug. The controller is coupled to the charging circuit and the feeding circuit, and the controller transmits a current information and an operation command to the electric vehicle through the second cable so as to determine whether the electric vehicle is to be operated in a charging mode or a feeding mode according to the operation command. In the charging mode, the controller sets a first current to be able to flow through the charging path, and the first current charges the electric vehicle; in the feeding mode, the controller sets a second current to be able to flow through the feeding path, and the second current feeds power to the power grid.

In order to solve the above-mentioned problems, the present disclosure provides an electric vehicle charger. The electric vehicle charger includes a plug, a first cable, a second cable, and a charging and discharging device. The first cable is coupled to the plug. The second cable is coupled to a connection terminal. The charging and discharging device is coupled to the first cable and the second cable. The charging and discharging device includes a charging circuit and a feeding circuit. The charging circuit is coupled to the first cable and the second cable, and provides a charging path for the grid power to be transmitted from the plug to the connection terminal. The charging circuit includes a first switching switch. A first terminal of the first switching switch is coupled to the first cable, and a second terminal of the first switching switch is coupled to the second cable. The feeding circuit is coupled to the first cable and a second cable, and provides a feeding path for the vehicle power to be transmitted from the connection terminal to the plug. The feeding circuit includes a second switching switch, a conversion circuit, and a third switching switch. A first terminal of the second switching switch is coupled to the first cable. A first terminal of the conversion circuit is coupled to the second switching switch. A first terminal of the third switching switch is coupled to a second terminal of the conversion circuit, and a second terminal of the third switching switch is coupled to the second cable.

The main purpose and effect of the present disclosure is that the electric vehicle charger can provide a bidirectional charging function, that is, by the charging and discharging operation of the electric vehicle charger, the grid power provided by the power grid can be used to charge the electric vehicle, and the vehicle power provided by the electric vehicle can also be fed back to the power grid to achieve the effect of bidirectional power supply.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1A is a configuration diagram of a first embodiment of a conventional electric vehicle charger.
FIG. 1B is a configuration diagram of a second embodiment of the conventional electric vehicle charger.
FIG. 1C is a configuration diagram of a third embodiment of the conventional electric vehicle charger.
FIG. 2 is a block circuit diagram of a portable electric vehicle charger according to the present disclosure.
FIG. 3 is a relatively detailed block circuit diagram of the portable electric vehicle charger according to the present disclosure.
FIG. 4A is a schematic diagram of a current direction of the portable electric vehicle charger in a charging mode according to the present disclosure.
FIG. 4B is a schematic diagram of a current direction of the portable electric vehicle charger in a feeding mode according to the present disclosure.
FIG. 5 is a more detailed block circuit diagram of the portable electric vehicle charger according to the present disclosure.

### Description of Reference Numerals in Drawings

100B: grid charging device
100C: charging pile
100: electric vehicle charger
1: plug
NTC: thermistor
R: recognition resistor
2: first cable
3: second cable
4: charging and discharging device
42: charging circuit
SW1: first switching switch
44: feeding circuit
SW2: second switching switch
Q1: first switch
Q2: second switch
SW3: third switching switch
Q3: third switch
Q4: fourth switch
442: conversion circuit
AC/DC: AC-to-DC conversion circuit
DC/AC: DC-to-AC conversion circuit
46: controller
48: auxiliary circuit
CP: control pilot pin
PP: proximity pilot pin
5: connection terminal
Lc: charging path
I1: first current
Lf: feeding path
I2: second current
200: power grid
200A: socket
300: electric vehicle
300A: connection terminal
Pac: grid power
Pv: vehicle power
Pcc: working power
Pdc: DC power
Is: specification information
Ic: current information
Co: operation command
A1,A2: arrow direction

### DETAILED DESCRIPTION

Reference will now be made to the drawing figures to describe the present disclosure in detail. It will be understood that the drawing figures and exemplified embodiments of present disclosure are not limited to the details thereof.

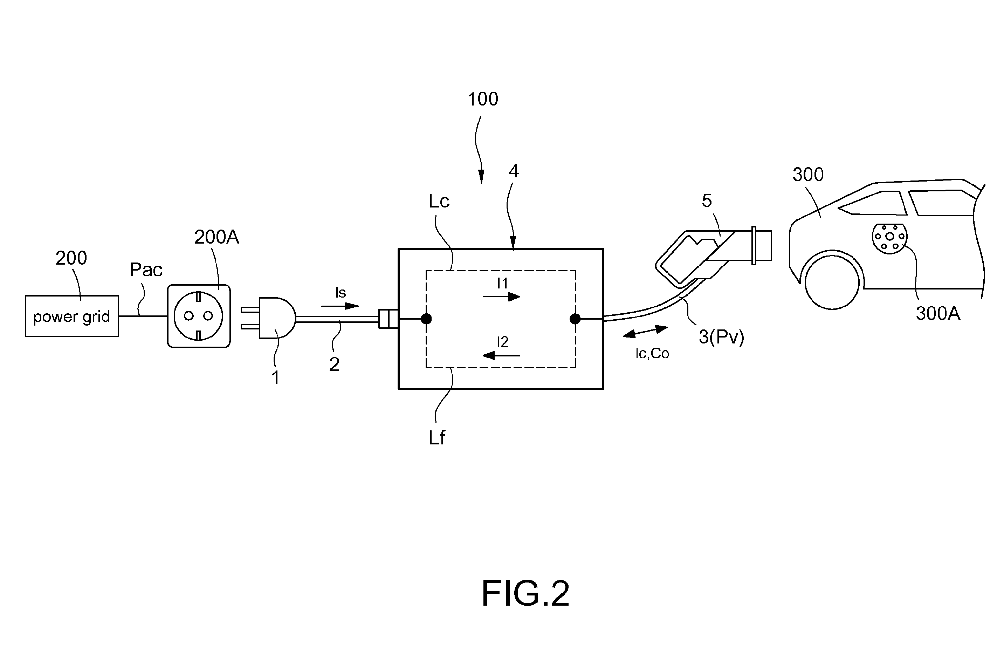

Please refer to FIG. 2, which shows a block circuit diagram of a portable electric vehicle charger according to the present disclosure, and also refer to FIG. 1A to FIG. 1C. The portable electric vehicle (EV) charger 100 (hereinafter abbreviated as "EV charger 100") is coupled to a power grid 200 and an electric vehicle 300. The EV charger 100 includes a plug 1, a first cable 2, a second cable 3, a charging and discharging device 4, and a connection terminal 5. The plug 1 is coupled to the power grid 200 by plugging into a socket 200A, and the connection terminal 5 is coupled to the electric vehicle 300 by plugging into a connection terminal 300A of the electric vehicle 300. A first terminal of the first cable 2 is coupled to the plug 1, and a second terminal of the first cable 2 is coupled to a first terminal of the charging and discharging device 4. A first terminal of the second cable 3 is coupled to the connection terminal 5, and a second terminal of the second cable 3 is coupled to a second terminal of the charging and discharging device 4. In particular, the EV charger 100 does not include a grid charging device 100B as shown in FIG. 1B or a charging pile 100C as shown in FIG. 1C, but uses a conventional plug 1 (such as but not limited to US standard, European standard, etc.) to plug into a conventional socket 200A to acquire a grid power Pac.

Furthermore, the main purpose and effect of the present disclosure is that the electric vehicle charger 100 can provide a bidirectional charging function. That is, according to the charging and discharging operations of the electric vehicle charger 100, a grid power Pac provided by the power grid 200 can be used to charge the electric vehicle 300, and a vehicle power Pv provided by the electric vehicle 300 can also be fed back to the power grid 200. In particular, the charging and discharging device 4 includes a charging path Lc and a feeding path Lf. When the grid power Pac charges the electric vehicle 300, the grid power Pac is provided to the electric vehicle 300 through the plug 1, the first cable 2, the charging path Lc of the charging and discharging device 4, the second cable 3, and the connection terminal 5. On the contrary, when the vehicle power Pv is fed back to the power grid 200, the vehicle power Pv is provided to the power grid 200 through the connection terminal 5, the second cable 3, the feeding path Lf of the charging and discharging device 4, the first cable 2, and the plug 1. The plug 1, the first cable 2, the charging and discharging device 4, the second cable 3, and the connection terminal 5 may form an integrated EV charger 100, or may be a separated EV charger 100. Specifically, for the separated EV charger 100, the plug 1 and the first cable form a modular structure, and the connection between the first cable 2 and the charging and discharging device 4 is a pluggable (replaceable) connection structure. The charging and discharging device 4 can receive a specification information Is of the plug 1 through the first cable 2, and the specification information Is depends on the type of the plug 1 currently plugged into the charging and discharging device 4 through the first cable 2. Furthermore, the charging and discharging device 4 can also transmit a current information Ic and an operation command Co to the electric vehicle 300 through the second cable 3. In particular, the charging and discharging device 4 can realize whether the currently connected plug 1 complies with the relevant specifications of the electric vehicle charger 100 according to the specification information Is, and the specifications of the plug 1 (US standard, European standard, etc.), the voltage of the power grid is three-phase/single-phase, 110V/220V, the upper limit of the current (usually determined by the voltage), frequency, phase and other information.

On the other hand, the electric vehicle 300 and the charging and discharging device 4 can transmit the current information Ic so that the electric vehicle 300 can confirm and set how much current can be drawn, and the operation command Co is mainly to make the electric vehicle 300 and the charging and discharging device 4 realize each other's current operation. For example, but not limited to, the electric vehicle 300 and the charging and discharging device 4 can confirm whether the electric vehicle 300 is correctly coupled to the charging and discharging device 4, and whether the plug 1 is correctly plugged into the socket 200A according to the operation command Co to determine whether it is in a standby state. In addition, according to the transmission of the operation command Co, the charging and discharging device 4 can also determine which mode the electric vehicle 300 wants to operate in (for example, but not limited to, a charging mode or a feeding mode) to selectively provide the corresponding path (that is, the charging mode provides the charging path Lc, and the feeding mode provides the feeding path Lf) to perform the corresponding operation.

When the plug 1 is plugged into the socket 200A, the charging and discharging device 4 can receive the specification information Is of the plug 1 through the first cable 2. In the operation of the charging mode, the charging and discharging device 4 first confirms whether the electric vehicle 300 is correctly coupled to the connection terminal 5, and whether the plug 1 is correctly plugged into the socket 200A. When both are correctly coupled, the operation command Co indicates that the charging and discharging device 4 is in the standby state, and the electric vehicle 300 and the charging and discharging device 4 can realize that the current state is the standby state according to the operation command Co. Afterward, the value of the operation command Co may be adjusted according to the requirements of the electric vehicle 300, and the charging and discharging device 4 determines whether the electric vehicle 300 wants to operate in the charging mode or the feeding mode according to the value of the operation command Co.

In particular, the charging path Lc is connected to the feeding path Lf in parallel, and the paths of the charging path Lc and the feeding path Lf are different (independent to each other) and the currents are opposite. In the charging mode, the charging and discharging device 4 forms the charging path Lc and disconnects the feeding path Lf to prevent the current on the charging path Lc from flowing to the feeding path Lf and causing additional power consumption. On the contrary, in the feeding mode, the charging and discharging device 4 disconnects the charging path Lc and forms the feeding path Lf to convert the vehicle power Pv into the grid power Pac through the feeding path Lf. When the feeding path Lf converts the vehicle power Pv into the grid power Pac, the feeding path Lf can convert the vehicle power Pv of three-phase electricity or single-phase electricity (hereinafter abbreviated as "three-phase or single-phase vehicle power Pv") into the grid power Pac of three-phase electricity or single-phase electricity (hereinafter abbreviated as "three-phase or single-phase grid power Pac"). For example, but not limited to, the feeding path Lf can convert the three-phase vehicle power Pv into the single-phase grid power Pac, or convert the single-phase vehicle power Pv into the three-phase grid power Pac. Therefore, adaptive power conversion can be performed according to the requirements of the power grid 200 and the electric vehicle 300 to avoid the situation where the power cannot be used due to the wiring difference between the two.

The operation command Co may preferably be a voltage value, and the current operation state of the charging and discharging device 4 is set by adjusting the voltage value. For example, when the electric vehicle 300 is not correctly coupled to the connection terminal 5, or the plug 1 is not correctly plugged into the socket 200A, the voltage value of the operation command Co is a specific value (for example, but not limited to, 0V) so that the electric vehicle 300 can realize that the charging and discharging device 4 has not entered the standby state according to the specific value, otherwise (for example, but not limited to, 5V) it is known that the charging and discharging device 4 has entered the standby state.

In addition, when the electric vehicle 300 wants to operate in the charging mode or the feeding mode, the electric vehicle 300 can set the modes by adjusting the value of the operation command Co. For example, when the charging and discharging device 4 has entered the standby state (same as the above example, the value of the operation command Co is 5V), the standby state is preset to the charging mode. On the contrary, after the charging and discharging device 4 has entered the standby state, the electric vehicle 300 may adjust the value of the operation command Co (for example, but not limited to, the electric vehicle 300 adjusts the value of the operation command Co from 5V to 3V) to inform the charging and discharging device 4 that it needs to operate in the feeding mode. In particular, the operation command Co is not limited to the voltage value, for example, but not limited to, the operation command Co may also be a digital signal (for example, but not limited to, logic 011 corresponds to the feeding mode), or a pulse-width modulation (PWM) signal, and a duty cycle (DUTY) is used to adjust the operation mode (for example, but not limited to, a duty cycle of 50% corresponds to the feeding mode), and so on, which will not be repeated here.

Taking the charging mode as an example, when the charging and discharging device 4 is coupled to the plug 1 through the first cable 2, the charging and discharging device 4 receives the specification information Is of the plug 1 through the first cable 2 to acquire an upper limit value of the charging current (i.e., a first current I1) of the charging and discharging device 4 (for example, but not limited to, 18A, which usually varies according to the voltage of the power grid and the capacity of the plug 1). Afterward, the charging and discharging device 4 adjusts the current information Ic according to the upper limit value of the charging current, and the current information Ic corresponds to the first current I1 that can flow through the charging path Lc (generally preset as the upper limit value of the current). When the charging and discharging device 4 is coupled to the electric vehicle 300 through the second cable 3, the charging and discharging device 4 can communicate with the electric vehicle 300 by transmitting the current information Ic to inform the upper limit value of the current that can flow through the charging path Lc. Afterward, the electric vehicle 300 can determine the first current I1 for final charging by adjusting the current information Ic (for example, but not limited to, after the charging and discharging device 4 notifies the electric vehicle 300 of the upper limit value of 18A, the electric vehicle 300 finally selects a value of 15A for charging). Finally, the charging and discharging device 4 sets the first current I1 that can flow through the charging path Lc according to the adjusted current information Ic.

In particular, the current information Ic may preferably be a pulse-width modulation (PWM) signal, and the magnitude of the first current I1 may be changed by adjusting the duty cycle (for example, but not limited to, a duty cycle of 30% corresponds to a first current I1 of 18A), but is not limited thereto. For example, but not limited to, the current information Ic may also be a digital signal (for example, but not limited to, logic 011 corresponds to a first current I1 of 18A), or a voltage value (for example, but not limited to, a voltage of 5V corresponds to a first current I1 of 18A) to indicate the magnitude of the first current I1, and so on, which will not be repeated here. Finally, when the operation mode and the first current I1 are determined, the charging and discharging device 4 provides a corresponding charging path Lc to perform the charging operation so as to charge the electric vehicle 300 according to the first current I1. On the other hand, after the operation command Co indicates that the charging and discharging device 4 is in the standby state, the charging and discharging device 4 can set the second current I2 that can flow through the feeding path Lf according to the current information Ic, and after the operation mode and the second current I2 are determined, the charging and discharging device 4 provides a corresponding feeding path Lf to perform the feeding operation so as to feed the power grid 200 according to the second current I2. In addition, the operation of the remaining feeding modes is similar to the above-mentioned charging mode, and will not be repeated here.

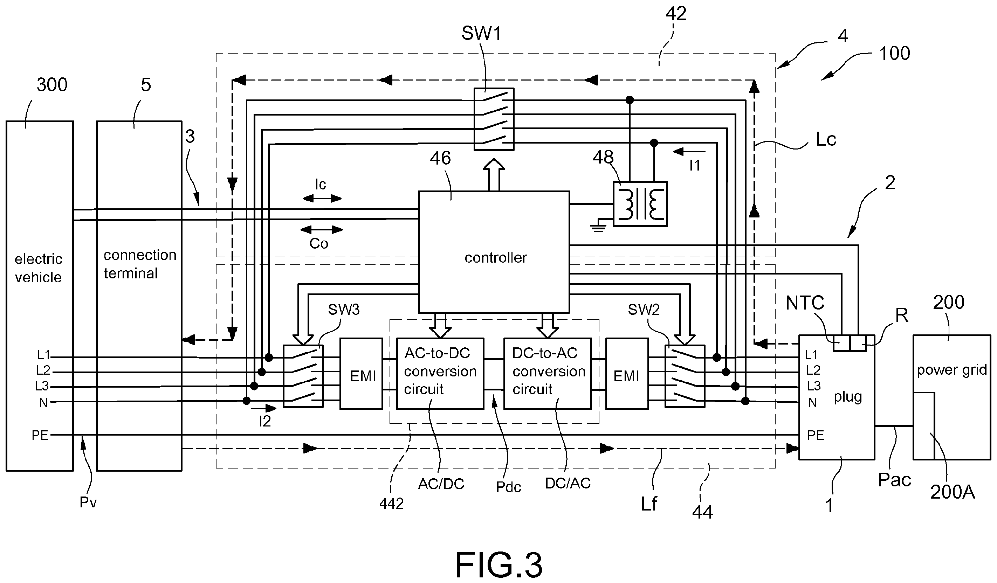

Please refer to FIG. 3, which shows a relatively detailed block circuit diagram of the portable electric vehicle charger according to the present disclosure, and also refer to FIG. 2. FIG. 3 only shows a preferred implementation under the structure of FIG. 2, but is not limited thereto. In FIG. 3, the charging and discharging device 4 includes a charging circuit 42, a feeding circuit 44, and a controller 46, and the charging circuit 42 is connected to the feeding circuit 44 in parallel. The charging circuit 42 is coupled to the first cable 2 and the second cable 3, and provides a charging path Lc for the grid power Pac to be transmitted from the plug 1 to the connection terminal 5. The feeding circuit 44 is coupled to the first cable 2 and the second cable 3, and provides a feeding path Lf for the vehicle power Pv provided by the electric vehicle 300 to be transmitted from the connection terminal 5 to the plug 1. The controller 46 is coupled to the charging circuit 42 and the feeding circuit 44, and the controller 46 includes a protection pin, an identification pin, a control pilot pin CP, and a proximity pilot pin PP. The identification pin and the protection pin are coupled to the plug 1 through the first cable 2, and the plug 1 may preferably include a thermistor NTC and a recognition resistor R.

The protection pin is coupled to the thermistor NTC through the first cable 2 to determine whether to perform an over-temperature protection for the charging and discharging device 4 according to the change in the resistance value of the thermistor NTC. The identification pin is coupled to the recognition resistor R through the first cable 2 so that the controller 46 acquires the specification information Is through the recognition resistor R. Therefore, if the plug 1 uses the recognition resistor R, the identification pin can, for example but not limited to, provide a constant current source to generate a specific voltage for the recognition resistor R, and the specific voltage is the specification information Is. The control pilot pin CP is coupled to the electric vehicle 300 through the second cable 3, and the control pilot pin CP and the electric vehicle 300 transmit the current information Ic to each other so that the controller 46 and the electric vehicle 300 set and adjust the first current I1 that can flow through the charging path Lc according to the current information Ic, and charge the electric vehicle 300 according to the first current I1, or set and adjust the second current I2 that can flow through the feeding path Lf according to the current information Ic, and feed power to the power grid 200 according to the second current I2. The proximity pilot pin PP is coupled to the electric vehicle 300 through the second cable 3, and the proximity pilot pin PP and the electric vehicle 300 transmit the operation command Co to each other so that the controller 46 and the electric vehicle 300 determine the current operation state according to the operation command Co.

In one embodiment, the controller 46 may be a control chip, which may be a microcontroller, a signal processor, etc., but the controller 46 may also be a control circuit composed of a circuit or a logic gate. In addition, the controller 46 shown in FIG. 3 may include not only a control chip. It may also include circuits and circuit components for detecting and transmitting signals (such as, but not limited to, analog-to-digital conversion circuits, resistors, etc.). Since these circuits and circuit components not shown are not the main features of the present disclosure, they will not be described in detail here. On the other hand, the controller 46 may also have a wireless communication function, such as, but not limited to, WiFi, Bluetooth, mobile communications (such as, 2/3/4/5G, etc.) so that the portable EV charger can communicate with the outside world.

The charging circuit 42 includes a first switching switch SW1. A first terminal of the first switching switch SW1 is coupled to the first cable 2, and a second terminal of the first switching switch SW1 is coupled to the second cable 3. The controller 46 is coupled to a control terminal of the first switching switch SW1, and provides a control signal to turn on and turn off the first switching switch SW1. In the charging mode, the controller 46 controls the first switching switch SW1 to be turned on so that the charging circuit 42 forms and provides the charging path Lc. On the contrary, when the controller 46 controls the first switching switch SW1 to be turned off (for example, but not limited to, the standby state or the feeding mode, etc.), two terminals of the charging circuit 42 are disconnected to prevent the current from being mistakenly provided from the power grid 200 to the electric vehicle 300. In particular, the first switching switch SW1 is preferably a switch such as a relay that can allow large current to flow through, and provides the effect of no leakage current when it is turned off and simple configuration.

The charging and discharging device 4 further includes an auxiliary circuit 48, and the auxiliary circuit 48 is coupled to a path between the first switching switch SW1 and the first cable 2. Regardless of whether the charging and discharging device 4 operates in the standby state, a charging mode, or the discharging mode, the auxiliary circuit 48 converts the grid power Pac into the working power Pcc so as to continuously supply power to the controller 46 after the plug 1 is coupled to the power grid 200. In general, the controller 46 is usually a device that receives direct current, and therefore the auxiliary circuit 48 may be a converter for converting AC (alternating current) into DC (direct current). Preferably, the auxiliary circuit 48 may couple the grid power Pac on the path between the first switching switch SW1 and the first cable 2 by coupling, for example but not limited to, an isolation transformer so as to electrically isolate the controller 46 from the main power transmission path.

On the other hand, the feeding circuit 44 includes a second switching switch SW2, a conversion circuit 442, and a third switching switch SW3. A first terminal of the second switching switch SW2 is coupled to the first cable 2, and a second terminal of the second switching switch SW2 is coupled to the conversion circuit 442. A first terminal of the third switching switch SW3 is coupled to the conversion circuit 442, and a second terminal of the third switching switch SW3 is coupled to the second cable 3. The controller 46 is coupled to the control terminals of the second switching switch SW2 and the third switching switch SW3, and provides control signals to turn on and turn off the second switching switch SW2 and the third switching switch SW3. In the feeding mode, the controller 46 controls the second switching switch SW2 and the third switching switch SW3 to be turned on, and activates/enables the conversion circuit 442 to form the feeding path Lf. Therefore, the vehicle power Pv can be provided to the conversion circuit 442 through the third switching switch SW3, and the conversion circuit 442 converts the vehicle power Pv into the grid power Pac, and then provides it to the plug 1 through the second switching switch SW2. In particular, the three-phase or single-phase vehicle power Pv may be converted into the three-phase or single-phase grid power Pac. When the controller 46 controls the second switching switch SW2 and the third switching switch SW3 to be turned off and the conversion circuit 442 is disabled (for example, but not limited to, the standby state or the charging mode, etc.), the two terminals of the feeding circuit 44 are disconnected to prevent the current from being incorrectly provided by the electric vehicle 300 to the power grid 200.

Furthermore, the conversion circuit 442 may preferably include an AC-to-DC conversion circuit AC/DC, a DC-to-AC conversion circuit DC/AC, and an energy storage capacitor (not shown). A first terminal of the AC-to-DC conversion circuit AC/DC is coupled to the third switching switch SW3, and a second terminal of the AC-to-DC conversion circuit AC/DC is coupled to the energy storage capacitor (not shown). A first terminal of the DC-to-AC conversion circuit DC/AC is coupled to the energy storage capacitor (not shown), and a second terminal of the DC-to-AC conversion circuit DC/AC is coupled to the second switching switch SW2. In particular, the controller 46 controls the AC-to-DC conversion circuit AC/DC to convert the vehicle power Pv into a DC power Pdc so as to store the DC power Pdc in the energy storage capacitor (not shown). Afterward, the controller 46 controls the DC-to-AC conversion circuit DC/AC to convert the DC power Pdc into the grid power Pac so as to feed power to the power grid 200.

Since the conversion circuit 442 includes the energy storage capacitor (not shown), the conversion circuit 442 can perform arbitrary conversion of three-phase/single-phase power. Preferably, the AC-to-DC conversion circuit AC/DC may convert the three-phase vehicle power Pv into DC power Pdc, and the DC-to-AC conversion circuit DC/AC converts the DC power Pdc into the single-phase grid power Pac. Alternatively, the AC-to-DC conversion circuit AC/DC converts the single-phase vehicle power Pv into the DC power Pdc, and the DC-to-AC conversion circuit DC/AC converts the DC power Pdc into the three-phase grid power Pac. Therefore, adaptive power conversion can be performed in response to the requirements of the power grid 200 and the electric vehicle 300 to avoid the situation where the power cannot be used due to the wiring difference between the two. In one embodiment, the AC-to-DC conversion circuit AC/DC and the DC-to-AC conversion circuit DC/AC may be conversion circuits without isolation transformers (for example, but not limited to, conversion circuits such as a buck converter or a boost converter that do not have isolation transformers at the input and output terminals). The reason is that the voltage and current at the two terminals of the conversion circuit 442 are similar, and therefore there is no need to use a larger isolation transformer, but it is not limited to this. In addition, the AC-to-DC conversion circuit AC/DC and the DC-to-AC conversion circuit DC/AC may not include an energy storage capacitor and its DC link (for example, but not limited to, a current source or matrix AC-to-AC converter) to save the volume occupied by the energy storage capacitor.

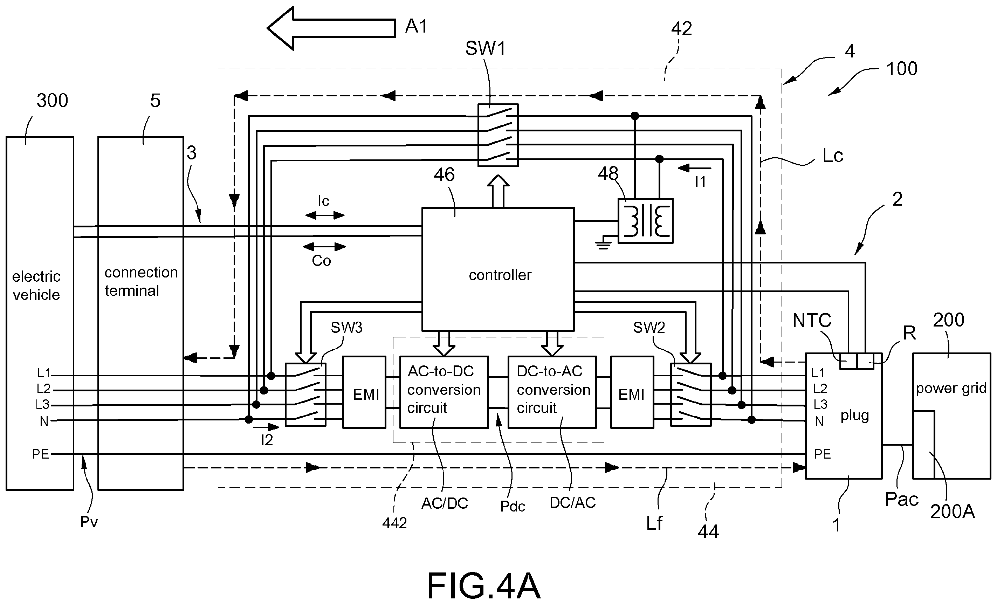

Please refer to FIG. 4A, which shows a schematic diagram of a current direction of the portable electric vehicle charger in a charging mode according to the present disclosure, and also refer to FIG. 2 to FIG. 3. FIG. 4A shows the current direction of the charging mode, and the arrow direction A1 represents the flow direction of the first current I1. Specifically, when the plug 1 is plugged into the socket 200A, the auxiliary circuit 48 receives the grid power Pac and converts the grid power Pac into the working power Pcc to supply power to the controller 46. When the controller 46 is powered and operates normally, the controller 46 can receive the specification information Is of the plug 1 through the first cable 2 to acquire the upper limit values of the charging current (i.e., the first current I1) and the feeding current (i.e., the second current I2) of the charging and discharging device 4 (which usually varies according to the voltage of the power grid and the capacity of the plug 1).

When the controller 46 confirms that the electric vehicle 300 is correctly coupled to the connection terminal 5 and the plug 1 is correctly plugged into the socket 200A, the controller 46 adjusts the value of the operation command Co to indicate that the charging and discharging device 4 is in the standby state. In the standby state, the controller 46 determines whether the electric vehicle 300 is to be operated in the charging mode or the feeding mode according to the value of the operation command Co. On the other hand, in the standby state, the controller 46 can also set the first current I1 and the second current I2 that can flow through the charging path Lc according to the current information Ic. When the controller 46 determines that the operation mode is the charging mode and the magnitude of the first current I1 is also set (by transmitting the current information Ic to and from the electric vehicle 300), the controller 46 turns on the first switching switch SW1 so that the charging circuit 42 forms the charging path Lc.

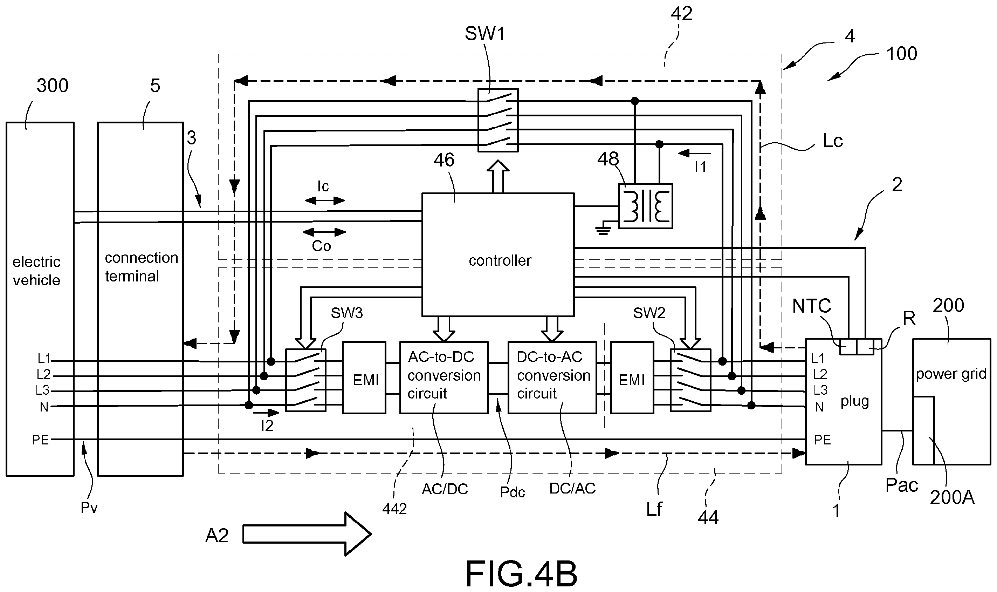

Please refer to FIG. 4B, which shows a schematic diagram of a current direction of the portable electric vehicle charger in a feeding mode according to the present disclosure, and also refer to FIG. 2 to FIG. 4A. FIG. 4B shows the current direction of the feeding mode, and the arrow direction A2 represents the flow direction of the second current I2. The difference between FIG. 4A and FIG. 4B is that when the controller 46 determines that the operation mode is the feeding mode, and the magnitude of the second current I2 is also set (by transmitting current information Ic to and from the electric vehicle 300), the controller 46 turns on the second switching switch SW2 and the third switching switch SW3, and activates the conversion circuit 442 to form the feeding path Lf. In one embodiment, the operation method not described in FIG. 4B is similar to that in FIG. 4A, and will not be repeated here.

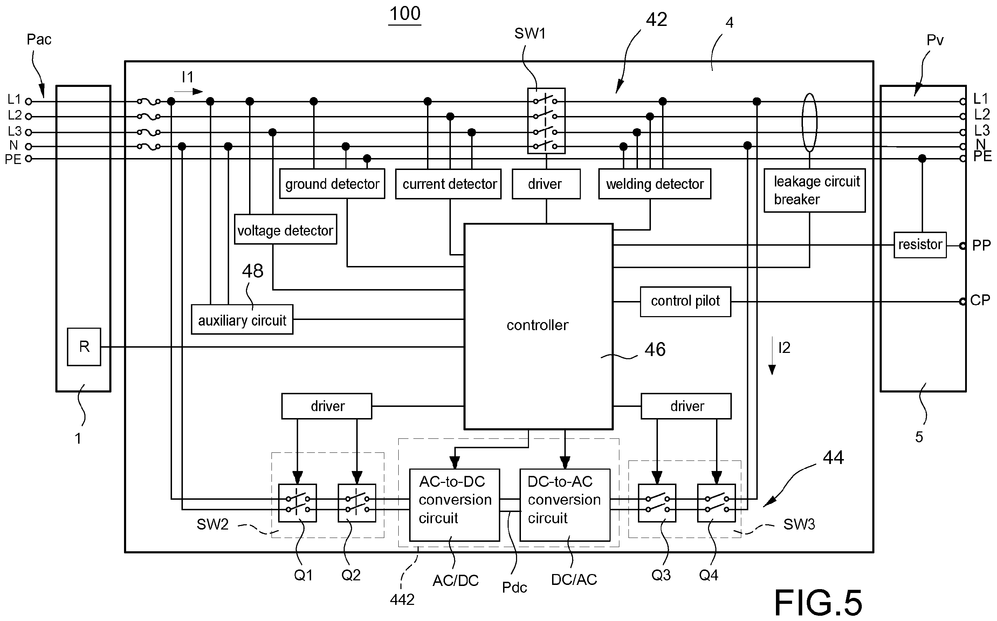

Please refer to FIG. 5, which shows a more detailed block circuit diagram of the portable electric vehicle charger according to the present disclosure, and also refer to FIG. 2 to FIG. 4B. In FIG. 5, in addition to the components described in FIG. 2 to FIG. 4B, multiple drivers, detectors (circuits), etc. are also included. Since most of these circuits are only for the protection of the EV charger 100 and are not the main features of the present disclosure, these circuits will not be described one by one. Therefore, the EV charger 100 of the present disclosure still has protection functions such as leakage current, overcurrent, voltage, frequency, and grounding detection during the charging and feeding processes to ensure the safety of users, electric vehicles, residences, and city electricity. In addition, in FIG. 5, the second switching switch SW2 preferably includes a first switch Q1 and a second switch Q2 connected in series, and the third switching switch SW3 preferably includes a third switch Q3 and a fourth switch Q4 connected in series. When the controller 46 controls the second switching switch SW2 to be turned on, the first switch Q1 and the second switch Q2 are turned on, otherwise they are turned off. The purpose and effect of the second switching switch SW2 including the first switch Q1 and the second switch Q2 connected in series is that the first switch Q1 and the second switch Q2 can provide a mutual backup disconnection.

Specifically, when the feeding mode is exited, the controller 46 controls the second switching switch SW2 to be turned off. In this condition, when the second switching switch SW2 fails and cannot be turned off smoothly, the grid power Pac will be mistakenly provided to the conversion circuit 442. Therefore, according to the backup function of the first switch Q 1 and the second switch Q2, when one of the two fails and cannot be turned off smoothly, the other switch that has not failed can still be turned off as a backup so that the path from the first cable 2 to the conversion circuit 442 can still be normally disconnected. Similarly, when the controller 46 controls the third switching switch SW3 to be turned on, the third switch Q3 and the fourth switch Q4 are turned on, otherwise they are turned off. Its operation method and the effect that can be achieved are similar to the second switching switch SW2, and will not be repeated here.

Although the present disclosure has been described with reference to the preferred embodiment thereof, it will be understood that the present disclosure is not limited to the details thereof. Various substitutions and modifications have been suggested in the foregoing description, and others will occur to those of ordinary skill in the art. Therefore, all such substitutions and modifications are intended to be embraced within the scope of the present disclosure as defined in the appended claims.

## Claims

1. A charging and discharging device coupled to a power grid through a first cable and a plug, and coupled to an electric vehicle through a second cable and a connection terminal, the charging and discharging device comprising:
a charging circuit coupled to the first cable and the second cable, and configured to provide a charging path for a grid power to be transmitted from the plug to the connection terminal,
a feeding circuit coupled to the first cable and a second cable, and configured to provide a feeding path for a vehicle power to be transmitted from the connection terminal to the plug, and
a controller coupled to the charging circuit and the feeding circuit, and the controller configured to transmit a current information and an operation command to the electric vehicle through the second cable so as to determine whether the electric vehicle is to be operated in a charging mode or a feeding mode according to the operation command,
wherein in the charging mode, the controller is configured to set a first current to be able to flow through the charging path, and the first current charges the electric vehicle; in the feeding mode, the controller is configured to set a second current to be able to flow through the feeding path, and the second current feeds power to the power grid.

2. The charging and discharging device as claimed in claim 1, wherein the plug and the first cable form a modular structure, and the connection between the first cable and the charging and discharging device is a pluggable connection structure; the controller is configured to receive a specification information of the plug through the first cable, and provide the current information according to the specification information to set the first current and the second current.

3. The charging and discharging device as claimed in claim 1, wherein the charging circuit comprises:
a first switching switch, a first terminal of the first switching switch coupled to the first cable and a second terminal of the first switching switch coupled to the second cable,
wherein in the charging mode, the controller is configured to turn on the first switching switch to form the charging path.

4. The charging and discharging device as claimed in claim 3, further comprising:
an auxiliary circuit coupled to the first switching switch and the first cable,
wherein in the charging mode or the feeding mode, the auxiliary circuit is configured to convert the grid power into a working power to supply power to the controller.

5. The charging and discharging device as claimed in claim 1, wherein the feeding circuit comprises:
a second switching switch, a first terminal of the second switching switch coupled to the first cable,
a conversion circuit, a first terminal of the conversion circuit coupled to the second switching switch, and
a third switching switch, a first terminal of the third switching switch coupled to a second terminal of the conversion circuit, and a second terminal of the third switching switch coupled to the second cable,
wherein in the feeding mode, the controller is configured to turn on the second switching switch and the third switching switch, and activate the conversion circuit to form the feeding path.

6. The charging and discharging device as claimed in claim 5, wherein the second switching switch comprises a first switch and a second switch connected in series; the third switching switch comprises a third switch and a fourth switch connected in series.

7. The charging and discharging device as claimed in claim 5, wherein the conversion circuit comprises:
an AC-to-DC conversion circuit coupled to the third switching switch, and
a DC-to-AC conversion circuit coupled to the second switching switch and the AC-to-DC conversion circuit,
wherein the controller is configured to control the AC-to-DC conversion circuit to convert the vehicle power into a DC power, and control the DC-to-AC conversion circuit to convert the DC power into the grid power.

8. The charging and discharging device as claimed in claim 5, wherein the conversion circuit is configured to convert the vehicle power of three-phase electricity into the grid power of single-phase electricity, or convert the vehicle power of single-phase electricity into the grid power of three-phase electricity.

9. The charging and discharging device as claimed in claim 5, wherein when the controller is configured to indicate that the charging and discharging device is in a standby state according to the operation command, the controller is configured to determine whether the electric vehicle is to be operated in the charging mode or the feeding mode according to a value of the operation command.

10. The charging and discharging device as claimed in claim 9, wherein after the standby state, the controller is configured to set the first current to be able to flow through the charging path according to the current information, and turn on a first switching switch of the charging circuit.

11. The charging and discharging device as claimed in claim 9, wherein after the standby state, the controller is configured to set the second current to be able to flow through the feeding path according to the current information, turn on the second switching switch and the third switching switch of the feeding circuit, and activate the conversion circuit.

12. An electric vehicle charger comprising:
a plug,
a first cable coupled to the plug,
a second cable coupled to a connection terminal, and
a charging and discharging device coupled to the first cable and the second cable, and the charging and discharging device comprising:
a charging circuit coupled to the first cable and the second cable, and configured to provide a charging path for the grid power to be transmitted from the plug to the connection terminal, and the charging circuit comprising:
a first switching switch, a first terminal of the first switching switch coupled to the first cable, and a second terminal of the first switching switch coupled to the second cable, and
a feeding circuit coupled to the first cable and a second cable, and configured to provide a feeding path for the vehicle power to be transmitted from the connection terminal to the plug, and the feeding circuit comprising:
a second switching switch, a first terminal of the second switching switch coupled to the first cable,
a conversion circuit, a first terminal of the conversion circuit coupled to the second switching switch, and
a third switching switch, a first terminal of the third switching switch coupled to a second terminal of the conversion circuit, and a second terminal of the third switching switch coupled to the second cable.

13. The electric vehicle charger as claimed in claim 12, wherein the charging and discharging device is configured to receive a specification information of the plug through the first cable, and transmit a current information and an operation command to an electric vehicle through the second cable so as to determine whether the electric vehicle is to be operated in a charging mode or a feeding mode according to the operation command.

14. The electric vehicle charger as claimed in claim 13, wherein in the charging mode, the charging and discharging device is configured to provide the current information according to the specification information to set a first current to be able to flow through the charging path, and charge the electric vehicle according to the first current; in the feeding mode, the charging and discharging device is configured to provide the current information according to the specification information to set a second current to be able to flow through the feeding path, and feed power to a power grid according to the second current.

15. The electric vehicle charger as claimed in claim 12, wherein the charging path is connected to the feeding path in parallel, and in a charging mode, a controller of the charging and discharging device is configured to turn on the first switching switch, turn off the second switching switch and the third switching switch, and disable the conversion circuit.

16. The electric vehicle charger as claimed in claim 12, wherein the charging path is connected to the feeding path in parallel, and in a feeding mode, a controller of the charging and discharging device is configured to turn off the first switching switch, turn on the second switching switch and the third switching switch, and activate the conversion circuit.

17. The electric vehicle charger as claimed in claim 16, wherein the conversion circuit is configured to convert the vehicle power of three-phase electricity into the grid power of single-phase electricity, or convert the vehicle power of single-phase electricity into the grid power of three-phase electricity.

18. The electric vehicle charger as claimed in claim 14, wherein the plug and the first cable form a modular structure, and the connection between the first cable and the charging and discharging device is a pluggable connection structure; when the charging and discharging device is coupled to the plug through the first cable, the charging and discharging device is configured to receive the specification information of the plug through the first cable, and set the first current to be able to flow through the charging path or the second current to be able to flow through the feeding path according to the specification information.

19. The electric vehicle charger as claimed in claim 14, wherein when the charging and discharging device is indicated in a standby state according to the operation command, the charging and discharging device is configured to determine whether the electric vehicle is to be operated in the charging mode or the feeding mode according to a value of the operation command.

20. The electric vehicle charger as claimed in claim 19, wherein after the standby state, the charging and discharging device is configured to set the first current to be able to flow through the charging path according to the current information, and form the charging path; or after the standby state, the charging and discharging device is configured to set the second current to be able to flow through the feeding path according to the current information, and form the feeding path.
